# FASCICULE DE BREVET EUROPEEN

(11) **EP 2 459 427 B1**
(45) Date de publication et mention de la délivrance du brevet: **01.05.2013**
(21) Numéro de dépôt: 09747808.5
(22) Date de dépôt: 21.10.2009
(51) Int. Cl.: B61B 10/04, B61F 9/00, B62D 1/26

(54) **MÉTHODE ET DISPOSITIF DE DÉTECTION DE DÉRAILLEMENT D'UN VÉHICULE GUIDÉ**
VERFAHREN UND VORRICHTUNG ZUR ERKENNUNG DES ENTGLEISENS EINES FAHRERLOSEN FAHRZEUGES
METHOD AND DEVICE FOR DETECTING THE DERAILMENT OF A GUIDED VEHICLE

(30) Priorité: 28.07.2009 EP 09290596
(43) Date de publication de la demande: 06.06.2012
(73) Titulaire: Siemens SAS, 93200 Saint-Denis (FR)
(72) Inventeur: CONSOLI, Luciano, F-75015 Paris (FR)
(74) Mandataire: Capré, Didier
(86) Numéro de dépôt international: PCT/EP2009/063828
(87) Numéro de publication internationale: WO 2011/012176

(56) Documents cités:
- WO-A1-2008/074942
- DE-C- 102 794
- FR-A1- 2 455 538

## Description

La présente invention concerne une méthode et un dispositif pour détecter en temps réel le déraillement d'un véhicule guidé par un système de guidage comprenant un organe de guidage en interaction avec un rail servant au guidage du véhicule, selon les préambules des revendications 1 et 8.

Par « véhicule guidé », il est fait référence aux moyens de transport en commun tels que des bus, trolleybus, tramways, métros, trains ou unités de train, etc., mais aussi aux moyens de transport de charge tel que, par exemple, les ponts roulants, pour lesquels l'aspect sécuritaire est très important et pour lesquels le guidage est assuré en particulier par un unique rail. Ce dernier sert de guide à l'organe de guidage, qui prend généralement appui sur le rail et suit sa trajectoire au cours du déplacement du véhicule. L'organe de guidage permet par exemple au système de guidage de diriger selon la trajectoire définie par le rail un essieu directeur du véhicule, ledit essieu étant par exemple pourvu de roues porteuses.

Une première variante connue de l'organe de guidage comprend une paire de roues de guidage, aussi appelées galets de guidage, montées en V et roulant sur ledit rail de guidage. Ce système de roues disposées en V est en particulier utilisé par des véhicules routiers se déplaçant le long du rail de guidage. Les galets en question peuvent être du type avec mentonnet tel que décrit dans le brevet US 7,228,803 B2 ou protégés par un système de sécurité anti-extraction tel que présenté dans le document WO 2008/074942 A1. Un autre type de système anti-déraillement inventé à la fin du 19^{ème} siècle et décrit dans le document DE 102794 C comprend une paire de pinces, chacune destinée à saisir un des rails d'une voie de chemin de fer, afin d'éviter un déraillement d'un train.

Les véhicules guidés par le type d'organe de guidage décrit précédemment ont comme principe général de fonctionnement, ledit organe de guidage qui suit le rail au moyen de la paire de galets en contact avec le rail et commande au système de guidage une direction à imposer à un essieu directeur du véhicule. Le rail de guidage est en particulier composé d'une semelle fixée au sol et d'une âme supportant un champignon sur lequel les galets sont en appui via une bande de roulement. Chacun des galets d'une même paire de galets de guidage a ainsi sa bande de roulement en contact avec une surface du champignon, appelée surface de roulement et répartie symétriquement de part et d'autre de la partie supérieure du champignon. Lors du déplacement du véhicule, les galets sont en contact avec le champignon, et leurs mentonnets respectifs entourent ce dernier et s'approchent de l'âme en dessous de celui-ci. Comme la distance entre les extrémités inférieures des deux mentonnets entourant le champignon est inférieure à la largeur du champignon, une extraction du champignon hors de l'emprise desdits galets, ou encore hors de la zone comprise entre les bandes de roulement et les mentonnets, n'est possible que si l'angle de fixation des galets, i.e. l'angle correspondant au secteur formé par les axes de rotation de chacun des galets d'une paire de galets et qui est coupé par le plan de symétrie de la paire de galets en V, augmente et/ou si les mentonnets et/ou les bords extérieurs du champignon se déforment.

L'orientation correcte du véhicule est ainsi obtenue par couplage de la paire de galets de l'organe de guidage du système de guidage avec l'essieu directeur du véhicule. Si les galets sont correctement encaissés sur le rail de guidage, le véhicule suit la trajectoire décrite par le rail lors de son déplacement. Par contre, si les galets sortent de leur position normale de fonctionnement, par exemple, si le champignon du rail de guidage sort de la zone comprise entre les bandes de roulement et les mentonnets, alors le véhicule risque de quitter la trajectoire établie initialement par le rail. En effet, dès que les galets ne sont plus soumis à la direction imposée par le rail de guidage, ils peuvent partir vers la droite ou la gauche du rail, déviant ainsi le véhicule de la trajectoire prévue. Le scénario en question est défini comme une perte de guidage ou simplement déguidage du véhicule. En d'autres termes, le positionnement correct des galets est une condition nécessaire, mais pas suffisante, pour garantir la direction correcte du véhicule. En effet, d'autres pannes peuvent survenir, comme par exemple la rupture d'une bielle de direction, dont la conséquence peut aussi être le déraillement.

Une seconde variante de l'organe de guidage est décrite dans le document WO 2008/074942 A1 et consiste en une paire de galets enserrant un champignon, tel que décrit précédemment, mais à la différence que les galets sont dépourvus des mentonnets. Dans ce cas, les mentonnets des roues sont remplacés par des mentonnets fixes et solidaires à une base de fixation des galets. Cette configuration apporte une rigidité plus élevée qui augmente l'effort nécessaire pour que les galets s'extraient du rail.

Une troisième variante consiste en un organe de guidage comprenant au moins une roue à gorge, i.e. une roue caractérisée par une partie creuse permettant de rouler sur différents chemins de roulement ou d'être utilisée avec un cordage. La roue à gorge est en appui vertical sur le rail et comprend entre autre des mentonnets dépassant des deux côtés du champignon.

Quelle que soit la variante de l'organe de guidage considérée, l'extraction du champignon hors de l'emprise des galets est possible, et par conséquent, le déguidage du véhicule est un risque à prendre en considération afin d'éviter lors de déraillements des dégâts matériels ou corporels portant notamment atteinte à l'intégrité physique des passagers dans le cas des transports publics. De plus, certains pays ont défini des règles relatives à la construction et au développement des moyens de transports publics qui requièrent une prise en compte de l'aspect sécuritaire du transport, comme c'est le cas avec les normes de construction des tramways définies par le droit fédéral allemand et intitulées "Verordnung über den Bau und Betrieb der Strassenbahnen" (voir le lien internet http://bundesrecht.juris.de/strabbo 1987/index.html) qui exigent une détection du déraillement des véhicules automatiques. A cette fin, des systèmes de détection de déguidage de véhicules guidés sont utilisés lors du guidage par rail, en particulier pour les véhicules ferroviaires, et permettent usuellement de déclencher des procédures sécuritaires.

Un premier système de détection est décrit par le brevet US 4,783,028. Il consiste en un système hydropneumatique d'identification de l'angle de roulis sur un essieu du véhicule. Le système en question est capable d'identifier le moment où une roue déraille et ensuite de commander une purge des chambres d'un système de freinage, ce qui provoque l'application des efforts de freinage par les étriers. Malheureusement, un tel système nécessite des valves de contrôles au design particulier, et peut être sujet à des fuites hydrauliques ou pneumatiques. Il comprend en outre de nombreux composants susceptibles de tomber en panne: accumulateurs et réservoirs, conduites sous pression, contrôleurs de pression, valves de sécurité, accessoires permettant la mise sous pression, etc.

Un second système est basé sur une détection des variations d'accélération des galets. Ce système part du principe qu'une fois qu'une roue a déraillé, les accélérations engendrées dépassent un certain niveau et déclenchent un système de sécurité. Cette identification des variations d'accélération peut être basée sur un système électronique tel que décrit dans le document US 2006/0122745 A1, ou pneumatique comme décrit dans le document CN 1730335A. Cette technique de détection nécessite une mesure par capteur de l'accélération, puis un traitement et une analyse de l'information acquise par le capteur. Une telle technique est généralement soumise à des cas de pannes et de fausses interprétations. Pour éviter ces défaillances, il est nécessaire de construire des systèmes à haut taux de fiabilité, ce qui engendre des coûts élevés et des développements complexes.

Un troisième système de détection est basé sur des méthodes de détection sans contact. Ces méthodes peuvent être de principe optique, par exemple un faisceau lumineux entre un émetteur et un récepteur est détecté au moment où la roue sort de sa position normale d'enraillement tel que décrit dans le document WO 01/64494 A1, ou bien utiliser des capteurs magnétodynamiques, acoustiques ou autres, qui identifient le déraillement tel que proposé par exemple dans le document RU2235031-C1. Les méthodes de détection sans contact sont généralement sensibles à l'environnement contraignant que représente le système roue-rail en milieu extérieur. Il s'agit par exemple de l'empoussièrement, de l'encrassement, des vibrations, des perturbations électromagnétiques et des variations climatiques, comme par exemple des variations de températures (-33°C à 50°C) ou d'humidité, ou encore la formation de glace. Cet environnement contraignant oblige une maintenance fréquente du système de détection, ainsi que le design de systèmes à haut taux de fiabilité afin d'éviter les fausses alertes, engendrant ainsi à nouveau des coûts élevés, que ce soit par exemple dans la maintenance ou le développement de tel systèmes.

Un quatrième système de détection est basé sur la transmission d'un signal à travers le rail. Le principe consiste en l'utilisation d'un émetteur de signal relié à une roue de guidage et d'un récepteur dans une autre roue. Tant que les deux roues sont en contact avec le rail, un signal est transmis de l'émetteur au récepteur. Lorsqu'une des deux roues perd le contact avec le rail, la transmission du signal est coupée, ce qui a pour résultat de déclencher un système de sécurité du véhicule guidé, comme décrit par exemple dans le document WO 2008/074942 A1. Une fois de plus, un tel système est relativement complexe et nécessite un traitement et une analyse du signal afin d'éviter de fausses alertes et les interférences d'autres signaux.

Ainsi, les systèmes de détection mis en oeuvre jusqu'à présent restent complexes et coûteux, comprenant généralement de nombreux composants chacun potentiellement apte à créer une panne ou une fausse alerte de déraillement. En effet, la complexité de ces systèmes formés de nombreux composants est susceptible d'engendrer de nombreuses défaillances, liées par exemple à des fuites hydrauliques ou pneumatiques, à de mauvais traitements ou interprétations de signaux, à l'environnement extérieur contraignant qui peut par exemple fausser les signaux reçus par un capteur.

Un objectif de la présente invention est de proposer une méthode et un dispositif simple, résistant, rapide, sûr et fiable, de détection de déraillement d'un véhicule guidé par un rail de guidage.

Un autre objectif de la présente invention est de proposer un dispositif de détection garantissant un faible coût de développement, de fabrication, de mise en place et de maintenance du fait de l'usage de composants simples à mettre en oeuvre et à entretenir.

Afin de parvenir à ces objectifs, un dispositif et une méthode sont proposés par le contenu des revendications 1 et 8.

Un ensemble de sous-revendications présente également des avantages de l'invention.

A partir d'une méthode de détection de déraillement adaptée à un véhicule guidé par un système de guidage comprenant au moins un organe de guidage en interaction avec un champignon d'un rail servant de guidage au véhicule guidé, en particulier, l'organe de guidage étant en contact mécanique avec ledit champignon, ledit organe de guidage pouvant comprendre, par exemple, une paire de roues en V à mentonnet ou une roue à gorge en appui sur le champignon du rail, la méthode selon l'invention est caractérisée en ce qu'elle comprend les étapes suivantes:
- une ouverture d'une mâchoire inférieure d'une pince entourant, en position fermée, étroitement et d'une manière libre de contact, le champignon du rail, ladite ouverture résultant d'une sortie au moins partielle dudit champignon hors de ladite mâchoire lors d'une perte de l'interaction de l'organe de guidage avec le champignon du rail, ladite perte d'interaction étant par exemple la perte de contact mécanique d'une roue de l'organe de guidage avec le rail, ou encore, la perte de contact d'au moins une des deux roues formant ladite paire de roues en V,
- une transmission mécanique de l'ouverture de la mâchoire, en particulier par au moins une tige supérieure de la pince à au moins un interrupteur comprenant deux configurations: une configuration nominale correspondant à la position fermée de la pince lors d'un enraillement correct, et une configuration d'alerte engendrée par la transmission mécanique de l'ouverture de la mâchoire à l'interrupteur,
- un actionnement par l'interrupteur d'au moins un système de sécurité du véhicule guidé lorsque l'interrupteur est en configuration d'alerte.

A partir d'un dispositif de détection de déraillement adapté à un véhicule guidé par un système de guidage comprenant au moins un organe de guidage en interaction avec un champignon d'un rail servant de guidage au véhicule guidé, en particulier, ladite interaction correspondant au contact mécanique de l'organe de guidage avec le champignon du rail de guidage du véhicule guidé, ledit organe de guidage pouvant comprendre, par exemple, une paire de roues à mentonnet ou une roue à gorge en appui sur le champignon du rail, le dispositif selon l'invention est caractérisé en ce qu'il comprend:
- une pince comprenant une mâchoire inférieure destinée à entourer, en position fermée, étroitement et d'une manière libre de contact, le champignon du rail, et s'ouvrant par ouverture de sa mâchoire lors d'une perte de l'interaction de l'organe de guidage avec le champignon du rail, ladite perte d'interaction étant par exemple une perte de contact mécanique entre une, voire plusieurs, roues de l'organe de guidage et le champignon du rail, et ladite ouverture résultant d'une sortie au moins partielle dudit champignon hors de la mâchoire,
- au moins une tige supérieure de la pince permettant de transmettre mécaniquement l'ouverture de la mâchoire à au moins un interrupteur,
- ledit interrupteur comprenant deux configurations, une configuration nominale correspondant à la position fermée de la pince lors d'un enraillement correct, et une configuration d'alerte engendrée par la transmission mécanique de l'ouverture de la mâchoire à l'interrupteur, ladite configuration d'alerte étant apte à actionner au moins un système de sécurité du véhicule guidé.

Le terme "interrupteur" précédemment cité fait référence à un dispositif physique caractérisé par deux configurations, une première configuration permettant d'autoriser un passage d'un flux, et une deuxième configuration permettant d'interrompre le passage dudit flux. Dans le cas présent, il s'agit par exemple d'un interrupteur électrique, dont la configuration nominale ouvre un circuit électrique, et la configuration d'alerte ferme ledit circuit, de sorte que le flux de courant soit respectivement coupé ou transmis à travers ledit interrupteur. Evidemment, le fonctionnement de l'interrupteur peut être inversé, de sorte que le circuit soit fermé en configuration nominale et ouvert en configuration d'alerte. Un autre exemple d'interrupteur au sens de l'invention est une valve hydraulique ou pneumatique comprenant lesdites deux configurations qui permettent par exemple de connecter ou déconnecter un circuit hydraulique, ou respectivement pneumatique, primaire d'un circuit hydraulique, ou respectivement pneumatique, secondaire. Dans ce cas, ladite valve peut en particulier commander une purge des chambres d'un système de freinage.

En particulier, la méthode de détection selon l'invention est caractérisée par une fixation de ladite pince sur un support solidaire à un support de l'organe de guidage du système de guidage. En d'autres termes, dans le cas où l'organe de guidage comprend une, voire plusieurs roues, ladite pince est par exemple fixée à un support solidaire à un support de la roue, ou des roues. Le fait que, selon le dispositif de détection selon l'invention, ladite pince est fixée sur un support solidaire à un support de l'organe de guidage, implique que tout éloignement de l'organe de guidage d'avec le rail, comme en cas de déraillement, résulte en une extraction, totale ou partielle, du champignon hors de l'emprise de la mâchoire de la pince. De plus, la fixation de la pince au support de l'organe de guidage rend ledit dispositif de détection adaptable à tout organe de guidage. En effet, il suffira de positionner ladite pince à proximité d'une zone d'interaction entre le rail et l'organe de guidage afin que le déraillement soit détecté de manière sûre et fiable par le dispositif de détection selon l'invention.

Avantageusement, ladite pince est positionnée en aval ou en amont dudit organe de guidage par rapport à un sens de déplacement du véhicule guidé. Par le terme "aval", respectivement "amont", il est fait référence à un positionnement de la pince devant, respectivement derrière, ledit organe de guidage, par rapport au sens de déplacement du véhicule. Il s'agit par exemple d'un positionnement de ladite pince au dessus du rail, dans un plan perpendiculaire ou quasi perpendiculaire au rail selon sa longueur, à une distance équivalant environ à un demi-rayon de galet formant ladite paire de galets en V, en aval ou en amont du centre de ladite paire de galets en V par rapport au sens de déplacement du véhicule guidé.

De plus, la méthode de détection selon l'invention est caractérisée en ce que ladite transmission mécanique de l'ouverture de la mâchoire est effectuée par deux tiges supérieures de la pince. Lesdites tiges supérieures sont ou forment par exemple un prolongement au dessus du rail de deux bras inférieurs de la pince, lesdits bras formant ladite mâchoire, avec un des deux bras se trouvant d'un côté du champignon et l'autre des deux bras se trouvant en vis-à-vis, de l'autre côté du champignon de sorte que lesdits bras forment ladite mâchoire et entourent étroitement le dit champignon dans ledit plan perpendiculaire ou quasi perpendiculaire au rail. Ainsi, les tiges supérieures prolongent chacune un bras de la mâchoire, soit en se croisant en un point d'articulation, i.e. selon une forme de ciseau, soit sans se croiser au niveau dudit point d'articulation. Dès lors, un écartement des extrémités libres des tiges supérieures par rapport à leur position initiale, définie lorsque la pince est en position fermée, est directement lié à l'ouverture de ladite mâchoire. Ainsi, en considérant comme référence la distance entre les extrémités libres des tiges lorsque la pince est fermée, un écartement positif caractérise une pince dont les tiges sont croisées, i.e. lorsque la pince s'ouvre, les extrémités libres des tiges s'éloignent l'une de l'autre, et un écartement négatif caractérise les tiges qui ne se croisent pas, i.e. lorsque la pince s'ouvre, les extrémités libres des tiges se rapprochent.

L'extrémité libre de chaque tige supérieure de la pince est soit en contact, soit en proche contact avec au moins un interrupteur, de sorte à effectuer ladite transmission mécanique de l'ouverture de la mâchoire conformément au dispositif de détection selon l'invention. Par proche contact, il est fait référence à une position de l'extrémité supérieure de la tige supérieure, i.e. son extrémité libre, proche de l'interrupteur, sans pour autant le contacter. Dans un cas particulier, ladite transmission mécanique de l'ouverture de la mâchoire peut être effectuée au moyen d'un câble reliant au moins une des tiges supérieure à l'interrupteur, l'autre tige étant par exemple contrainte dans son mouvement, de sorte qu'un déplacement relatif d'au moins une des tiges actionne au moyen dudit câble ledit interrupteur selon un principe analogue aux systèmes de freins par câble en vigueur pour une bicyclette.

Dans un mode particulier de réalisation, l'ouverture de la mâchoire est apte à être transmise à au moins deux interrupteurs, chacun des interrupteurs étant par exemple apte à être actionné par l'extrémité libre d'une desdites tiges supérieures. Dans ce cas, les deux tiges supérieures de la pince sont aptes à transmettre mécaniquement l'ouverture de la mâchoire, chacune à un interrupteur. Dans un autre mode réalisation, les deux interrupteurs sont actionnés par exemple par deux positions différentes d'une unique tige supérieure. Dans tous les cas, ledit actionnement du système de sécurité résulte du passage d'au moins un desdits deux interrupteurs d'une configuration nominale à une configuration d'alerte, ledit passage résultant de la transmission mécanique de l'ouverture de la mâchoire. Avantageusement, lesdits interrupteurs sont indépendants l'un de l'autre et chacun est apte à maintenir ladite configuration d'alerte après ouverture de la mâchoire.

En effet, lors de la transmission mécanique de l'ouverture de la mâchoire audit interrupteur, l'extrémité libre de la tige supérieure actionne l'interrupteur, en exerçant par exemple une pression sur un poussoir dudit interrupteur. Dès lors, même si la mâchoire de la pince se referme et que l'extrémité libre de la tige supérieure cesse d'actionner le poussoir dudit interrupteur, ce dernier reste en configuration d'alerte, en maintenant par exemple ledit poussoir dans une position telle que s'il était constamment pressé par ladite extrémité libre de la tige supérieure.

Ainsi, la méthode de détection selon l'invention est avantageusement caractérisée par un maintien de l'interrupteur en configuration d'alerte après ouverture de la mâchoire. En effet, dès que la mâchoire s'ouvre pour libérer le champignon de son emprise, et cela, indépendamment du temps d'ouverture de la mâchoire, et même si, par un système de ressort, elle a regagné une position fermée après extraction du champignon de son emprise, l'interrupteur, une fois actionné, maintient sa configuration d'alerte qui permet notamment d'actionner le système de sécurité qui commande par exemple l'arrêt du véhicule ou avertit le conducteur ou un poste central de commande du déraillement avant que le véhicule ne dévie complètement de la trajectoire définie par le rail.

D'autre part, la méthode de détection selon l'invention est en particulier caractérisée en ce que ladite ouverture de la mâchoire de la pince est due à une sortie au moins partielle dudit champignon hors de ladite mâchoire, en particulier lors d'une perte de contact mécanique d'au moins une des roues d'un organe de guidage d'un système de guidage comprenant au moins deux roues enserrant le rail. Ainsi, d'une part, même si le champignon ne sort pas totalement de l'emprise de la pince, cette dernière est apte à transmettre une variation de l'ouverture de sa mâchoire afin que le déraillement soit détecté et signalé, et d'autre part, une perte de contact mécanique d'au moins une roue de l'organe de guidage, par exemple une roue à gorge, ou encore, au moins une des roues d'une paire de roues disposées en V dudit organe de guidage, résulte en une détection de déraillement. En effet, étant donné que la mâchoire de la pince entoure étroitement, mais de manière libre de contact, le champignon du rail, toute perte de contact d'au moins une roue de l'organe de guidage résulte en un changement de la position de la pince par rapport au champignon du rail, notamment un changement de position selon un axe vertical, ce qui a pour conséquence de varier l'ouverture de la mâchoire et donc, de transmettre mécaniquement ladite variation à l'interrupteur qui est apte à déclencher l'alerte de déraillement en actionnant le système de sécurité. En d'autres termes, le dispositif de détection selon l'invention est avantageusement caractérisé en ce que ladite pince est apte à s'ouvrir lors d'une perte de contact mécanique d'au moins une des roues d'un organe de guidage d'un système de guidage, lorsque ledit organe de guidage comprend au moins deux roues enserrant le rail.

Finalement, des exemples de réalisation et d'application sont fournis à l'aide de:
- Figure 1: exemple de réalisation selon l'invention d'un dispositif de détection de déraillement adapté pour un véhicule guidé par un système de guidage comprenant une paire de galets en V.
- Figure 2: exemple, selon l'invention, de zone disponible pour l'installation d'une partie du dispositif de détection de déraillement dans le cas d'un système de guidage comprenant une paire de galets en V.
- Figure 3: exemple de réalisation selon l'invention de dispositif de détection de déraillement adapté pour un véhicule guidé par un système de guidage comprenant une roue à gorge en appui sur un rail.

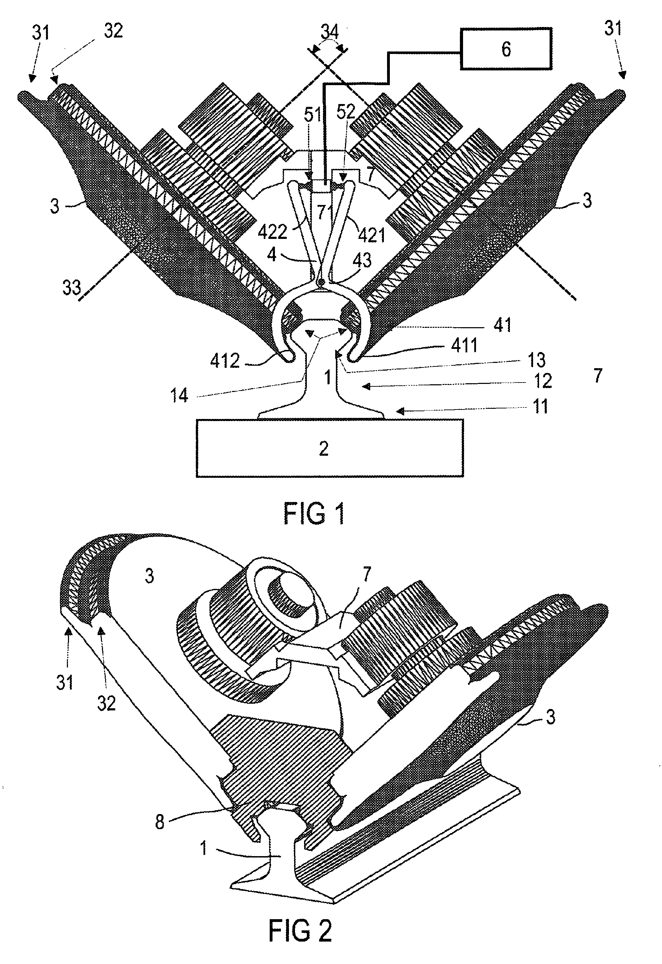

A titre d'exemple, la figure 1 montre un dispositif de détection de déraillement adapté pour un véhicule guidé par un système de guidage comprenant un organe de guidage en appui sur un rail 1 fixé au sol 2. Le rail comprend une semelle 11 surmontée par une âme 12 supportant un champignon 13. Ledit organe de guidage comprend en particulier une paire de galets 3 disposés en V et enserrant étroitement le champignon 13 du rail 1 de guidage. Les galets 3 comprennent entre autre une partie saillante appelée mentonnet 31 ayant pour but d'améliorer les conditions de roulement et de guidage du système de guidage, une bande de roulement 32, et un axe de rotation 33. Les axes de rotation 33 des galets d'une paire de galets définissent un angle appelé angle de fixation 34. Chacun des galets 3 est en appui, via sa bande de roulement 32, sur le champignon 13 du rail 1 de guidage, définissant de la sorte une zone de contact galet-rail appelée surface de roulement 14, et répartie, dans le cas particulier de l'organe de guidage comprenant une paire de galets 3 disposés en V, de chaque côté de la partie supérieure du champignon 13.

Une pince 4 comprenant une mâchoire 41 inférieure entourant, en position fermée, étroitement et d'une manière libre de contact, le champignon 13 du rail 1 est apte à s'ouvrir par ouverture de sa mâchoire 41 lors d'une perte de contact mécanique desdits galets 3 avec le rail 1, ladite ouverture résultant d'une sortie dudit champignon 13 hors de la mâchoire 41. En particulier, il suffit qu'un des deux galets 3 formant la paire de galets ne soit plus en contact avec ledit rail 1 pour que la pince 4 s'ouvre par ouverture de sa mâchoire 41. La mâchoire 41 est formée par exemple de deux bras 411, 412 se trouvant respectivement de part et d'autre du champignon 13 et dont la forme permet d'entourer le champignon 13 jusqu'à la partie supérieure de l'âme 12. L'ouverture de la mâchoire 41 correspond à l'écartement relatif d'un desdits bras 411 par rapport à l'autre desdits bras 412. De plus, la pince 4 comprend au moins une tige supérieure 421, 422 permettant de transmettre mécaniquement l'écartement de la mâchoire 41 à au moins un interrupteur 51, 52. Avantageusement, chacun des bras 411, 412 de la mâchoire 41 se prolonge au-dessus du rail en une tige supérieure 421, 422 qui permet, indépendamment l'une de l'autre, de déclencher son propre interrupteur 51, 52. Ainsi, deux interrupteurs 51, 52 indépendants sont par exemple aptes à être actionné chacun par une des tiges supérieures 421, 422. De cette façon, la transmission mécanique de l'ouverture de la mâchoire 41 est effectuée par au moins une des extrémités supérieures des tiges supérieures 421, 422, en particulier par la tige supérieure dont le bras de la mâchoire aura bougé lors de l'extraction du champignon hors de l'emprise de ladite mâchoire. Selon une première variante non représentée, le bras de la mâchoire et sa tige supérieure correspondante se trouvent de part et d'autre du rail à la façon d'un ciseau, et selon une seconde variante telle que présentée en figure 1, le bras de la mâchoire et sa tige supérieure correspondante se trouvent d'un même côté du rail. Dans la première variante, la tige supérieure actionne l'interrupteur par traction, tandis que dans la seconde variante, l'interrupteur est actionné par pression. La traction ou la pression agissent par exemple sur un poussoir de l'interrupteur. Dans le cas de la deuxième variante, les tiges supérieures sont en particulier presque en contact (faible distance entre l'extrémité de la tige supérieure et l'interrupteur) ou en contact direct avec l'interrupteur ou le poussoir de celui-ci.

D'autre part, les poussoirs desdits interrupteurs 51, 52 sont caractérisés notamment par deux positions: une première position correspondant à la configuration nominale de l'interrupteur, i.e. à la position fermée de la pince lors d'un enraillement correct, et une seconde position correspondant à la configuration d'alerte de l'interrupteur résultant de la transmission mécanique de l'ouverture de la mâchoire 41 par au moins une des deux tiges supérieures 421, 422 à au moins un desdits interrupteurs 51, 52, ladite seconde position permettant d'actionner au moins un système de sécurité 6 du véhicule guidé.

La pince 4 est fixée au moyen d'un système de fixation 43 à un support 71 solidaire d'un support 7 des galets 3 qui sert notamment de base de fixation desdits galets 3. En particulier, le système de fixation 43 coïncide avec une articulation de la pince. De plus, le système de fixation 43 peut avantageusement être pourvu d'un système à ressort qui ramène la pince 4 en position fermée quand la mâchoire 41 ne subit aucun effort de la part du champignon 13, en particulier lors de l'enraillement correct. En outre, le système de fixation 43 est dimensionné afin de pouvoir supporter des efforts issus des accélérations du système de guidage sans provoquer de faux déclenchements de l'interrupteur 51, 52. La forme et le dimensionnement de la mâchoire 41 permettent aussi de prendre en compte une usure de la zone de contact galet-rail, notamment l'usure des bandes de roulements 32 et des surfaces de roulement 14 du champignon 13. A cette fin, la forme de la mâchoire permet à la pince de se rapprocher dudit champignon selon un axe vertical, en particulier en laissant un espace libre entre le sommet du champignon et le fond de la mâchoire, de sorte que les bras de la mâchoire ne touchent pas le champignon lors d'une usure du rail ou/et des galets.

La présente invention tient aussi compte de l'encombrement de la pince entre les galets et le rail. En effet, la place disponible pour la pince dépend de sa position horizontale par rapport au centre des galets. Le rapprochement de la pince, dans un plan quasi-perpendiculaire au rail selon sa longueur, vers le centre des galets, ou respectivement son éloignement du centre des galets, réduit, respectivement augmente, la place disponible pour l'installation de la pince et le débattement du rail de guidage en courbe. En effet, plus la mâchoire de la pince est proche de la zone de contact galet-rail, moins son ouverture interfère avec une trajectoire courbe du rail, i.e. avec son débattement en courbe. En particulier, un exemple de compromis entre place disponible pour la pince et interférence avec le débattement du rail en courbe est trouvé en plaçant la pince à une distance équivalant à environ un demi-rayon de galet du centre des galets dans une zone 8 du plan quasi-perpendiculaire au rail, tel que présenté en figure 2, reprenant les mêmes références que la figure 1.

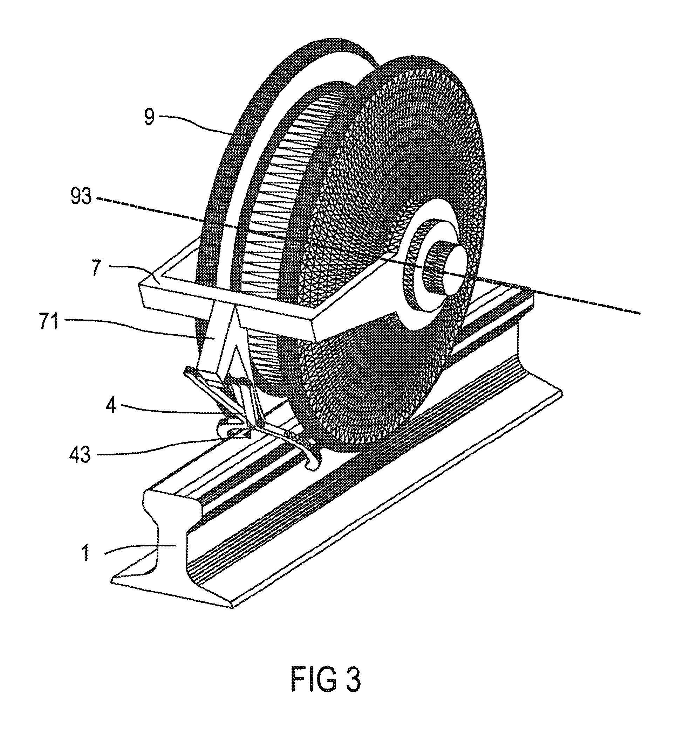

Dans une autre variante dudit organe de guidage, la paire de galets 3 disposés V est remplacée par une roue à gorge 9 en appui sur le rail 1 de guidage tel que présenté en figure 3.

Dans ce cas, la pince 4, tel que précédemment décrite, est placée en amont ou en aval de ladite roue à gorge 9, fixée au moyen d'un système de fixation 43 à un support 71 solidaire d'un support 7 de ladite roue à gorge 9, qui sert notamment de base de fixation de ladite roue à gorge. En particulier ladite pince 4 se trouve dans un plan incliné par rapport au plan formé par l'axe de rotation 93 de ladite roue à gorge et une droite verticale perpendiculaire au rail et coupant ledit axe de rotation. L'inclinaison de ladite pince permet d'approcher la mâchoire de la pince au plus près de la zone de contact entre la roue à gorge et le rail. De manière avantageuse, ladite inclinaison de la pince peut-être utilisée de manière analogue dans le cas d'une paire de galets disposés en V tel que présentés en Fig. 1, afin de s'approcher au plus près de la zone de contact des galets avec le rail.

Lors d'une désolidarisation d'au moins un galet de l'organe de guidage d'avec le rail, et cela indépendamment du type d'organe de guidage, i.e. qu'il comprenne par exemple une paire de galets en V ou une roue à gorge, la partie inférieure de la mâchoire 41 de la pince 4 touche la partie inférieure du champignon 13. Comme l'écartement entre les extrémités inférieures des bras 411, 412 formant la mâchoire est inférieur à la largeur du champignon 13, la mâchoire s'ouvre, par contact des parties inférieures du champignon avec les extrémités inférieures des bras 411, 412 formant la mâchoire, lors de la désolidarisation d'au moins un galet 3 d'avec le rail 1. Ainsi, l'ouverture maximale de la mâchoire 41 de la pince correspond, lors d'un déraillement selon un axe vertical perpendiculaire au rail, à la largeur maximale du champignon.

Lorsque la pince 4 est en position fermée, les extrémités supérieures des tiges supérieures 421, 422, i.e. les extrémités libres, n'ont aucune action sur leurs interrupteurs 51, 52 respectifs: aucun effort mécanique n'est transmis par la tige supérieure à l'interrupteur. Par contre, lors de ladite désolidarisation, l'ouverture de la mâchoire conduit à un rapprochement, l'une de l'autre, des extrémités supérieures des tiges supérieures 421, 422. Dû à ce rapprochement, au moins un des interrupteurs, voire les deux, est actionné, passant de sa configuration nominale à sa configuration d'alerte. En effet, lors de l'ouverture de la mâchoire 41, au moins une des tiges supérieure se déplace et actionne par exemple le poussoir de l'interrupteur qu'elle est apte à contacter. La course de l'extrémité supérieure de chacune des tiges supérieures entre une première position caractérisant la mâchoire fermée, et une seconde position caractérisant la mâchoire ouverte, est proportionnelle à la course du poussoir de l'interrupteur entre sa première position (configuration nominale) et sa seconde position (configuration d'alerte), ainsi qu'audit écartement des extrémités inférieures des deux bras formant la mâchoire, ledit écartement correspondant à la différence de distance entre les extrémités de la mâchoire lorsque cette dernière est ouverte ou fermée. Il est à noter que la mâchoire est dite fermée lorsqu'elle entoure étroitement le champignon, et ainsi, bien que le terme "fermée" soit utilisé, il existe un espace entre les deux extrémités libres des bras de la mâchoire, espace entre lequel se trouve la base du champignon.

De plus, au moins un des deux interrupteurs est en particulier apte à maintenir sa configuration d'alerte une fois que l'ouverture de la mâchoire lui a été transmise mécaniquement. La configuration d'alerte permet d'actionner le système de sécurité 6 du véhicule, soit en envoyant un signal aux systèmes en charge de la sécurité, soit en coupant un signal. En particulier, la coupure dudit signal déclenche lesdits systèmes en charge de la sécurité. Le système en charge de la sécurité peut par exemple activer un freinage d'urgence, ou envoyer un signal d'alerte au conducteur du véhicule guidé ou à un poste central de commande. En particulier, lesdits deux interrupteurs peuvent être remplacés par un unique interrupteur à double poussoirs, chacun des poussoirs étant lié à une des deux tiges supérieures et apte à être actionné par cette dernière. Dans ce cas, l'interrupteur est apte à maintenir sa position d'alerte dès qu'un des deux poussoirs a été actionné par la tige supérieure qui le contacte. L'actionnement des deux poussoirs, ou dans le cas de deux interrupteurs distincts et indépendants, des deux interrupteurs, fait alors redondance et permet d'augmenter la fiabilité du système de détection.

Grâce au maintien dans la configuration d'alerte de l'interrupteur, l'actionnement du système de sécurité 6 par ledit interrupteur aura lieu même dans des cas de temps d'extraction du champignon hors de l'emprise de la mâchoire extrêmement courts, pour lesquels la mâchoire retrouve une position fermée une fraction de seconde après le déraillement, ladite position fermée impliquant une relaxation de l'effort mécanique préalablement transmis par la tige supérieure à l'interrupteur.

Finalement, un tel système de détection basé sur l'ouverture d'une mâchoire d'une pince et la transmission mécanique de cette ouverture à un interrupteur est adaptable à tout organe de guidage, en interaction avec le rail, que ce soit par contact, comme dans le cas d'une roue en appui sur le champignon du rail, mais aussi lors d'interactions sans contact direct avec le rail. Il suffit en effet que le dit rail comprenne une partie en forme de champignon pour que le système soit adaptable au système de guidage par fixation sur un support solidaire à un support dudit organe de guidage. En particulier, le dispositif de détection est avantageusement adaptable aux organes de guidages comprenant deux roues montées en V en appui sur le champignon du rail, mais aussi aux organes de guidages comprenant une unique roue, notamment dans le cas de roues à gorge tel que présenté en Fig. 3.

En résumé, la méthode et le dispositif selon l'invention permettent d'identifier en temps réel, et de manière sûre et fiable, le déraillement du véhicule guidé tout en présentant plusieurs avantages par rapport aux méthodes et dispositifs existant. En effet, la simplicité du dispositif basé sur une logique électromécanique avec un seul dispositif de commande, l'interrupteur, lui permet d'avoir une fiabilité plus élevée que les systèmes existant. Les avantages par rapport à ces derniers sont notamment les suivants:
- un nombre réduit de composants susceptibles de tomber en panne, impliquant notamment un faible coût de développement, de fabrication, de mise en place et de maintenance;
- un fonctionnement libre de toute analyse, ou traitement de signal et d'information: en effet, seule la configuration binaire de l'interrupteur (configuration nominale
- configuration d'alerte) détermine l'actionnement du système de sécurité, sans qu'aucun traitement de l'information soit nécessaire;
- un fonctionnement de la pince libre de composants hydropneumatiques;
- une facilité de mise en place du dispositif et de sa maintenance: en effet, la simplicité du dispositif fait qu'il ne nécessite que peu d'entretien;
- une résistance aux environnements extérieurs contraignants liés aux véhicules guidés;
- une position fermée de la mâchoire libre de contact avec le rail, garantissant une faible usure du dispositif de détection;
- une conception libre d'un filtrage de signal servant à détecter un déguidage ou un problème réel;

## Revendications

1. Méthode de détection de déraillement adaptée à un véhicule guidé par un système de guidage comprenant au moins un organe de guidage en interaction avec un champignon (13) d'un rail (1) servant au guidage du véhicule, **caractérisée en ce que** ladite méthode de détection comprend les étapes suivantes:
- une ouverture d'une mâchoire (41) inférieure d'une pince (4) entourant, en position fermée, étroitement et d'une manière libre de contact, le champignon (13) du rail (1), ladite ouverture résultant d'une sortie au moins partielle dudit champignon (13) hors de ladite mâchoire (41) lors d'une perte de l'interaction de l'organe de guidage avec le champignon (13) du rail (1),
- une transmission mécanique de l'ouverture de la mâchoire (41) à au moins un interrupteur (51, 52) comprenant deux configurations: une configuration nominale correspondant à la position fermée de la pince (4) lors d'un enraillement correct, et une configuration d'alerte engendrée par la transmission mécanique de l'ouverture de la mâchoire (41) à l'interrupteur (51, 52),
- un actionnement par l'interrupteur (51, 52) d'au moins un système de sécurité (6) du véhicule guidé lorsque l'interrupteur (51, 52) est en configuration d'alerte.

2. Méthode de détection selon la revendication 1 **caractérisée par** une fixation de ladite pince (4) sur un support (71) solidaire à un support (7) de l'organe de guidage.

3. Méthode de détection selon une des revendications 1 ou 2 **caractérisée par** un positionnement de ladite pince (4) en aval de l'organe de guidage par rapport à un sens de déplacement du véhicule guidé.

4. Méthode de détection selon une des revendications 1 à 3 **caractérisée en ce que** ladite transmission mécanique de l'ouverture de la mâchoire (41) est effectuée par deux tiges supérieures (421, 422) de la pince (4), un écartement des extrémités libres des tiges supérieures (421, 422) étant directement lié à l'ouverture de la mâchoire (41).

5. Méthode de détection selon une des revendications 1 à 4 **caractérisée par** un maintien de l'interrupteur (51, 52) en configuration d'alerte après ouverture de la mâchoire (41).

6. Méthode de détection selon une des revendications précédentes **caractérisée en ce que** ladite ouverture de la mâchoire (41) de la pince (4) est due à une sortie au moins partielle dudit champignon (13) hors de ladite mâchoire (41) lors d'une perte de contact mécanique d'au moins une des roues (3) d'un organe de guidage d'un système de guidage comprenant au moins deux roues (3) enserrant le rail (1).

7. Méthode de détection selon une des revendications précédentes **caractérisée en ce que** l'ouverture de la mâchoire (41) est transmise à au moins deux interrupteurs (51, 52) et que ledit actionnement du système de sécurité (6) résulte d'un passage d'au moins un desdits deux interrupteurs (51, 52) d'une configuration nominale à une configuration d'alerte.

8. Dispositif de détection de déraillement adapté à un véhicule guidé par un système de guidage comprenant au moins un organe de guidage en interaction avec un champignon (13) d'un rail (1) servant de guidage au véhicule, **caractérisé en ce que** ledit dispositif comprend:
- une pince (4) comprenant une mâchoire (41) inférieure destinée à entourer, en position fermée, étroitement et d'une manière libre de contact, le champignon (13) du rail (1), et s'ouvrant par ouverture de sa mâchoire (41) lors d'une perte d'interaction de l'organe de guidage avec le champignon (13) du rail (1), ladite ouverture résultant d'une sortie au moins partielle dudit champignon (13) hors de la mâchoire (41),
- au moins une tige supérieure (421, 422) de la pince (4) permettant de transmettre mécaniquement l'ouverture de la mâchoire (41) à au moins un interrupteur (51, 52),
- ledit interrupteur (51, 52) comprenant deux configurations: une configuration nominale correspondant à la position fermée de la pince (4) lors d'un enraillement correct, et une configuration d'alerte engendrée par la transmission mécanique de l'ouverture de la mâchoire (41) à l'interrupteur (51, 52), ladite configuration d'alerte étant apte à actionner au moins un système de sécurité (6) du véhicule guidé.

9. Dispositif de détection selon revendication 8 **caractérisé en ce que** ladite pince (4) peut être fixée sur un support (71) solidaire à un support (7) de l'organe de guidage.

10. Dispositif de détection selon une des revendications 8 ou 9 **caractérisé en ce que** ladite pince (4) est susceptible d'être positionnée en aval de l'organe de guidage par rapport à un sens de déplacement du véhicule guidé.

11. Dispositif de détection selon une des revendications 8 à 10 **caractérisé en ce que** ladite transmission mécanique de l'ouverture de la mâchoire (41) est effectuée par deux tiges supérieures (421, 422) de la pince (4), un écartement des extrémités libres des tiges supérieures (421, 422) étant directement lié à l'ouverture de la mâchoire (41).

12. Dispositif de détection selon une des revendications 8 à 11 **caractérisé en ce que** ledit interrupteur (51, 52) est apte à maintenir ladite configuration d'alerte après ouverture de la mâchoire (41).

13. Dispositif de détection selon une des revendications 8 à 12 **caractérisé en ce que** ladite pince (4) est apte à s'ouvrir lors d'une perte de contact mécanique d'au moins une des roues (3) d'un organe de guidage d'un système de guidage, lorsque ledit organe de guidage comprend au moins deux roues (3) enserrant le rail (1).

14. Dispositif de détection selon une des revendications 8 à 13 **caractérisé en ce que** deux tiges supérieures (421, 422) de la pince (4) sont aptes à transmettre mécaniquement l'ouverture de la mâchoire (41) chacune à un interrupteur (51, 52), lesdits interrupteurs (51, 52) étant indépendants l'un de l'autre.

## Claims

1. Derailment detection method designed for a vehicle that is guided by a guidance system comprising at least one guide member interacting with a railhead (13) of a rail (1) for guiding the vehicle, **characterised in that** said detection method comprises the following steps:
- opening of a lower jaw (41) of a clamp (4) closely and contactlessly surrounding the railhead (13) of the rail (1), said opening being caused by an at least partial movement of said railhead (13) to outside the jaw (41) in the event of a loss of interaction between the guide member and the railhead (13) of the rail (1),
- mechanically transmitting the opening of the jaw (41) to at least one switch (51, 52) comprising two configurations: a nominal configuration corresponding to the closed position of the clamp (4) when a rail position is correct, and a warning configuration caused by the mechanical transmission of the opening of the jaw (41) to the switch (51, 52), and
- when the switch (51, 52) is in the warning configuration, actuating by means of the switch (51, 52) at least one safety system (6) of the guided vehicle.

2. Detection method according to claim 1, **characterised by** attaching said clamp (4) to a supporting element (71) rigidly connected to a supporting element (7) of the guide member.

3. Detection method according to one of claims 1 or 2, **characterised by** the positioning of said clamp (4) downstream of the guide member relative to a direction of movement of the guided vehicle.

4. Detection method according to one of claims 1 to 3, **characterised in that** said mechanical transmission of the opening of the jaw (41) is carried out by two top rods (421, 422) of the clamp (4), wherein a gap between the free ends of the top rods (421, 422) is directly correlated with the opening of the jaw (41).

5. Detection method according to one of claims 1 to 4, **characterised by** holding the switch (51, 52) in warning configuration after the jaw (41) has opened.

6. Detection method according to one of the preceding claims, **characterised in that** said opening of the jaw (41) of the clamp (4) is due to an at least partial movement of the railhead (13) outside the jaw (41) in the event of a loss of mechanical contact of at least one of the wheels (3) of a guide member of a guidance system having at least two wheels (3) closely fitting the rail (1).

7. Detection method according to one of the preceding claims, **characterised in that** the opening of the jaw (41) is transmitted to at least two switches (51, 52) and that said actuation of the safety system (6) results from at least one of said two switches (51, 52) switching from a nominal configuration to a warning configuration.

8. Derailment detection device designed for a vehicle guided by a guidance system having at least one guide member interacting with a railhead (13) of a rail (1) used to guide the vehicle, **characterised in that** said device comprises:
- a clamp (4) having a bottom jaw (41) configured, in a closed position of said clamp, to closely and contactlessly surround the railhead (13) of the rail (1), said clamp (4) opening upon opening of the jaw (41) thereof in the event of a loss of interaction between the guide member and the railhead (13) of the rail (1), with said opening being caused by an at least partial movement of said railhead (13) out of the jaw (41),
- said clamp (4) having at least one top rod (421, 422) enabling the opening of said jaw (41) to be mechanically transmitted to at least one switch (51, 52),
- said switch (51, 52) having two configurations: a nominal configuration corresponding to the closed position of the clamp (4) when a rail position is correct, and a warning configuration caused by mechanical transmission of the opening of said jaw (41) to said switch (51, 52), said warning configuration being configured to actuate at least one safety system (6) of the guided vehicle.

9. Detection device according to claim 8, **characterised in that** said clamp (4) can be attached to a supporting element (71) rigidly connected to a supporting element (7) of the guide member.

10. Detection method according to one of claims 8 to 9, **characterised in that** said clamp (4) is likely to be positioned downstream of the guide member relative to a direction of movement of the guided vehicle.

11. Detection device according to one of claims 8 to 10, **characterised in that** said mechanical transmission of the opening of said jaw (41) is effected by two top rods (421, 422) of the clamp (4), with a gap between the free ends of said top rods (421, 422) being directly correlated with the opening of said jaw (41).

12. Detection device according to one of claims 8 to 11, **characterised in that** said switch (51, 52) is capable of maintaining said warning configuration after said jaw (41) has opened.

13. Detection device according to one of claims 8 to 12, **characterised in that** said clamp (4) is configured to open in the event of a loss of mechanical contact of at least one of the wheels (3) of a guide member of a guidance system, with said guide member having at least two wheels (3) closely fitting the rail (1).

14. Detection device according to one of claims 8 to 13, **characterised in that** two top rods (421, 422) of the clamp (4) are each configured to mechanically transmit the opening of the jaw (41) to a respective switch (51, 52), said switches (51, 52) being independent of one another.

## Patentansprüche

1. Verfahren zur Erkennung des Entgleisens für ein fahrerloses Fahrzeug, das von einem Führungssystem geführt wird, welches mindestens ein Führungsorgan umfasst, das mit einem Schienenkopf (13) einer zum Führen des Fahrzeugs dienenden Schiene (1) zusammenwirkt, **dadurch gekennzeichnet, dass** dieses Erkennungsverfahren die folgenden Schritte umfasst:
- ein Öffnen einer unteren Backe (41) einer Zange (4), die den Schienenkopf (13) der Schiene (1) in der geschlossenen Stellung eng und berührungslos umgibt, wobei das Öffnen auf einem zumindest teilweisen Austreten des Schienenkopfes (13) aus der Backe (41) bei einem Verlust der Wechselwirkung des Führungsorgans mit dem Schienenkopf (13) der Schiene (1) beruht,
- ein mechanisches Übertragen des Öffnens der Backe (41) zu mindestens einem Schalter (51, 52), der zwei Konfigurationen umfasst, und zwar eine Nennkonfiguration, die der geschlossenen Stellung der Zange (4) bei einem ordnungsgemäßen Aufgleisen entspricht, und eine Warnkonfiguration, die durch das mechanische Übertragen des Öffnens der Backe (41) zum Schalter (51, 52) bewirkt wird,
- ein Betätigen mindestens eines Sicherheitssystems (6) des fahrerlosen Fahrzeugs durch den Schalter (51, 52), wenn sich der Schalter (51, 52) in der Warnkonfiguration befindet.

2. Erkennungsverfahren nach Anspruch 1, **dadurch gekennzeichnet, dass** die Zange (4) an einem Halter (71) befestigt ist, der fest mit einem Halter (7) des Führungsorgans verbunden ist.

3. Erkennungsverfahren nach einem der Ansprüche 1 oder 2, **dadurch gekennzeichnet, dass** die Zange (4) bezogen auf eine Fahrtrichtung des fahrerlosen Fahrzeugs hinter dem Führungsorgan angeordnet ist.

4. Erkennungsverfahren nach einem der Ansprüche 1 bis 3, **dadurch gekennzeichnet, dass** das mechanische Übertragen des Öffnens der Backe (41) durch zwei obere Stangen (421, 422) der Zange (4) erfolgt, wobei die Beabstandung der freien Enden der oberen Stangen (421, 422) direkt an das Öffnen der Backe (41) gekoppelt ist.

5. Erkennungsverfahren nach einem der Ansprüche 1 bis 4, **dadurch gekennzeichnet, dass** der Schalter (51, 52) nach dem Öffnen der Backe (41) in der Warnkonfiguration gehalten wird.

6. Erkennungsverfahren nach einem der vorangehenden Ansprüche, **dadurch gekennzeichnet, dass** das Öffnen der Backe (41) der Zange (4) auf einem zumindest teilweisen Austreten des Schienenkopfes (13) aus der Backe (41) bei einem Verlust des mechanischen Kontakts von mindestens einem der Räder (3) eines Führungsorgans eines Führungssystems, das mindestens zwei die Schiene (1) umspannende Räder (3) umfasst, beruht.

7. Erkennungsverfahren nach einem der vorangehenden Ansprüche, **dadurch gekennzeichnet, dass** das Öffnen der Backe (41) zu mindestens zwei Schaltern (51, 52) übertragen wird und dass das Betätigen des Sicherheitssystems (6) auf dem Übergang von mindestens einem der beiden Schalter (51, 52) aus einer Nennkonfiguration in eine Warnkonfiguration beruht.

8. Vorrichtung zur Erkennung des Entgleisens für ein fahrerloses Fahrzeug, das von einem Führungssystem geführt wird, welches mindestens ein Führungsorgan umfasst, das mit einem Schienenkopf (13) einer zum Führen des Fahrzeugs dienenden Schiene (1) zusammenwirkt, **dadurch gekennzeichnet, dass** diese Vorrichtung Folgendes umfasst:
- eine Zange (4), welche eine untere Backe (41) umfasst, die dazu dient, den Schienenkopf (13) der Schiene (1) in der geschlossenen Stellung eng und berührungslos zu umgeben, und die sich durch Öffnen ihrer Backe (41) bei einem Verlust der Wechselwirkung des Führungsorgans mit dem Schienenkopf (13) der Schienen (1) öffnet, wobei dieses Öffnen auf einem zumindest teilweisen Austreten des Schienenkopfes (13) aus der Backe (41) beruht,
- mindestens eine obere Stange (421, 422) der Zange (4), die es ermöglicht, das Öffnen der Backe (41) mechanisch zu mindestens einem Schalter (51, 52) zu übertragen,
- wobei der Schalter (51, 52) zwei Konfigurationen umfasst, und zwar eine Nennkonfiguration, die der geschlossenen Stellung der Zange (4) bei einem ordnungsgemäßen Aufgleisen entspricht, und eine Warnkonfiguration, die durch das mechanische Übertragen des Öffnens der Backe (41) zum Schalter (51, 52) bewirkt wird, wobei die Warnkonfiguration geeignet ist, mindestens ein Sicherheitssystem (6) des fahrerlosen Fahrzeugs zu betätigen.

9. Erkennungsvorrichtung nach Anspruch 8, **dadurch gekennzeichnet, dass** die Zange (4) an einem Halter (71) befestigt sein kann, der fest mit einem Halter (7) des Führungsorgans verbunden ist.

10. Erkennungsvorrichtung nach einem der Ansprüche 8 oder 9, **dadurch gekennzeichnet, dass** die Zange (4) bezogen auf eine Fahrtrichtung des fahrerlosen Fahrzeugs hinter dem Führungsorgan angeordnet sein kann.

11. Erkennungsvorrichtung nach einem der Ansprüche 8 bis 10, **dadurch gekennzeichnet, dass** das mechanische Übertragen des Öffnens der Backe (41) durch zwei obere Stangen (421, 422) der Zange (4) erfolgt, wobei die Beabstandung der freien Enden der oberen Stangen (421, 422) direkt an das Öffnen der Backe (41) gekoppelt ist.

12. Erkennungsvorrichtung nach einem der Ansprüche 8 bis 11, **dadurch gekennzeichnet, dass** der Schalter (51, 52) geeignet ist, die Warnkonfiguration nach dem Öffnen der Backe (41) zu halten.

13. Erkennungsvorrichtung nach einem der Ansprüche 8 bis 12, **dadurch gekennzeichnet, dass** die Zange (4) geeignet ist, sich bei einem Verlust des mechanischen Kontakts von mindestens einem der Räder (3) eines Führungsorgans eines Führungssystems zu öffnen, wenn dieses Führungsorgan mindestens zwei Räder (3), die die Schiene (1) umspannen, besitzt.

14. Erkennungsvorrichtung nach einem der Ansprüche 8 bis 13, **dadurch gekennzeichnet, dass** zwei obere Stangen (421, 422) der Zange (4) geeignet sind, das Öffnen der Backe (41) jeweils mechanisch zu einem Schalter (51, 52) zu übertragen, wobei diese Schalter (51, 52) voneinander unabhängig sind.
